# EUROPÄISCHE PATENTANMELDUNG

(11) **EP 4 231 006 A1**
(43) Veröffentlichungstag der Anmeldung: **23.08.2023**
(21) Anmeldenummer: 23156112.7
(22) Anmeldetag: 10.02.2023
(51) Int. Cl.: G01N 27/9013

(54) **VORRICHTUNG UND VERFAHREN ZUM PRÜFEN EINER INNENWANDFLÄCHE EINES ROHRS**

(30) Priorität: 17.02.2022 DE 102022103820
(71) Anmelder: Sandvik Materials Technology Deutschland GmbH, 40549 Düsseldorf (DE)
(72) Erfinder: Froböse, Thomas, 33775 Versmold (DE)
(74) Vertreter: WSL Patentanwälte Partnerschaft mbB

(57) **Zusammenfassung**

Vorrichtung (1) zum Prüfen einer Innenwandfläche (2) eines Rohrs (3) aus Metall mit
einem Linearantrieb (7),
einem länglich ausgedehnten Sondenhalter (6) und
einer Wirbelstromsonde (4),
wobei die Wirbelstromsonde (4) an dem Sondenhalter (6) montiert ist und wobei der Sondenhalter (6) derart wirksam mit dem Linearantrieb (7) verbunden ist, dass der Sondenhalter (6) mit der Wirbelstromsonde (4) in einem Betrieb der Vorrichtung (1) in einer axialen Vorschubrichtung (11) durch das zu prüfenden Rohr (3) bewegbar ist.

## Beschreibung

### TECHNISCHES GEBIET

Die vorliegende Offenbarung betrifft eine Vorrichtung zum Prüfen einer Innenwandfläche eines Rohrs aus Metall, wobei die Vorrichtung einen Linearantrieb, einen länglich ausgedehnten Sondenhalter und eine Wirbelstromsonde aufweist, wobei die Wirbelstromsonde an dem Sondenhalter montiert ist und wobei der Sondenhalter derart wirksam mit dem Linearantrieb verbunden ist, dass der Sondenhalter mit der Wirbelstromsonde in einem Betrieb der Vorrichtung in einer axialen Vorschubrichtung durch das zu prüfende Rohr bewegbar ist.

Zudem betrifft die vorliegende Offenbarung eine Anlage zum Konfektionieren eines Rohrs aus Metall, wobei die Anlage eine solche Vorrichtung zum Prüfen der Innenwandfläche des Rohrs aufweist.

Ferner betrifft die vorliegende Offenbarung ein Verfahren zum Prüfen einer Innenwandfläche eines Rohrs aus Metall mit den Schritten (A) Bewegen einer Wirbelstromsonde in einer Vorschubrichtung durch das Rohr und (B) Erfassen eines in der Wand des Rohrs von der Innenwandfläche her induzierten Wirbelstroms mit der Wirbelstromsonde.

### HINTERGRUND

Aus dem Stand der Technik ist es bekannt, eine Wand eines Rohrs aus Metall mit Hilfe einer Wirbelstromprüfung auf Fehler zu untersuchen. Allerdings erweisen sich Wirbelstromprüfungen im Bereich der Innenwandfläche eines Rohrs als sehr aufwendig. Die Wirbelstromsonde durch den Innenquerschnitt des Rohrs hindurchgeführt werden, um das Rohr auf seiner vollständigen Länge zu Prüfen. Eine solche Durchführung der Wirbelstromsonde durch das Rohr ist konstruktiv aufwendig und zeitintensiv, da die Wirbelstromsonde nach der Messung wieder aus dem Rohr herausgezogen werden muss, um das Rohr weiterverarbeiten zu können. Daher werden Wirbelstrommessungen im Bereich der Innenwandfläche eines Rohrs nur als Stichprobenprüfung eingesetzt und nicht zur 100%-Prüfung in der laufenden Produktion.

Demgegenüber liegt der vorliegenden Offenbarung der Aspekt zugrunde, eine Vorrichtung zum Prüfen einer Innenwandfläche eines Rohrs aus Metall bereitzustellen, welche eine 100%-Prüfung von Rohren in einer laufenden Produktion ermöglicht.

### ZUSAMMENFASSUNG

Diese Aufgabe wird gemäß der vorliegenden Offenbarung mit einer Vorrichtung nach dem unabhängigen Anspruch 1 dieser Anmeldung gelöst. Dazu sieht die Vorrichtung der eingangs genannten Art vor, dass an dem Sondenhalter in der Vorschubrichtung vor der Wirbelstromsonde ein den Sondenhalter in einer Umfangsrichtung umschließender, elastisch verformbarer Abstreifer zum Abstreifen von Spänen oder anderen Verunreinigungen von der Innenwandfläche des Rohrs angeordnet ist.

Die Wirbelstromsonde ist an dem länglich ausgedehnten Sondenhalter montiert. Mit diesem Sondenhalter wird die Wirbelstromsonde von einem ersten Ende des Rohrs her in einer Vorschubrichtung durch das Rohr hindurchgeführt, sodass die Wirbelstromsonde die induzierten Wirbelströme entlang der gesamten axialen Erstreckung des Rohrs erfasst. Nach dem Erreichen des gegenüberliegenden zweiten Endes des Rohrs wird der Sondenhalter mit der Wirbelstromsonde wieder entgegen der Vorschubrichtung aus dem Rohr herausgezogen. Um eine Relativbewegung der Wirbelstromsonde durch das Rohr hindurch zu bewirken, ist der länglich ausgedehnte Sondenhalter mit dem Linearantrieb verbunden.

In einer Ausführungsform der Offenbarung ist der länglich ausgedehnte Sondenhalter ein Stab, beispielsweise ein zylindrischer Stab oder ein Rohr. In einer Ausführungsform der Offenbarung ist der Stab oder das Rohr aus Metall hergestellt.

Ein Linearantrieb im Sinne der vorliegenden Anmeldung ist ein Antrieb, welcher eine translatorische Bewegung des Sondenhalters bewirkt. Ein Linearantrieb umfasst gemäß einer Ausführungsform der vorliegenden Offenbarung ein Element, das ausgewählt ist aus einem Spindeltrieb, insbesondere einem Kugelgewindetrieb oder einem Rollengewindetrieb. In einer solchen Ausführungsform umfasst der Linearantrieb zudem einen drehenden Elektromotor zum treiben des Triebs. In einer alternativen Ausführungsform umfasst der Linearantrieb einen Hydraulikzylinder, einen Pneumatikzylinder oder einen elektromechanischen Linearantrieb, insbesondere einem Linearmotor oder einem Linearaktor.

Eine Wirbelstromsonde im Sinne der vorliegenden Anmeldung ist eine Messeinrichtung, zum Erfassen eines in der Wand des Rohrs induzierten Wirbelstroms, wobei der Wirbelstrom von einem durch eine Erregerspule generierten Magnetfeld induziert wird. Neben einer Erregerspule umfasst die Wirbelstromsonde daher einen Sensor, welcher das von dem Wirbelstrom erzeugten Magnetfelds detektiert. Die gemessenen Parameter des von dem induzierten Wirbelstrom erzeugten Magnetfelds sind die Amplitude und eine Phasenverschiebung zwischen dem Erregersignal und dem von dem Sensor gemessenen magnetischen Wechselfeld. In einer Ausführungsform der Offenbarung umfasst die Wirbelstromsonde als Sensor eine zweite Spule, die als Detektorspule bezeichnet wird. Alternativ wird ein anderer Magnetfeldsensor wie ein GMR-Sensor oder ein SQUID verwendet.

Die meisten Defekte und Beschädigungen in einem elektrisch leitfähigen Material, insbesondere in einem Metall, weisen eine von dem eigentlichen, nicht-defekten Material verschiedene elektrische Leitfähigkeit oder eine verschiedene Permeabilität auf. Somit unterscheidet sich der induzierte Wirbelstrom, aber auch das von dem induzierten Wirbelstrom erzeugte Magnetfeld im Bereich einer Beschädigung, eines Defekts oder einer Verunreinigung von dem Magnetfeld, welches für das intakte, unveränderte Material des Rohrs erfasst wird.

Dabei bezeichnet die axiale Vorschubrichtung in dieser Anmeldung die Richtung, in der die Wirbelstromsonde an dem Sondenhalter von einem einlaufseitigen ersten Ende her durch das Rohr bewegt wird. Nach einem Erreichen des zweiten, geneüberliegenden Endes des Rohrs wird der Sondenhalter aus dem Rohr entgegen der Vorschubrichtung zurückgezogen, um das Rohr von der Vorrichtung zum Prüfen der Innenwandfläche des Rohrs zu trennen.

Unter einer Anordnung des Abstreifers in der Vorschubrichtung vor der Wirbelstromsonde wird verstanden, dass ein Abschnitt der Innenwandfläche beim Zustellen der Wirbelstromsonde in der Zustellrichtung zuerst von dem Abstreifer und dann von der Wirbelstromsonde überstrichen wird.

Diese Reihenfolge weist den Vorteil auf, dass die Innenwandfläche vollständig gereinigt ist, bevor die Erfassung der Wirbelströme erfolgt.

Die der vorliegenden Offenbarung zugrundeliegende Idee ist es, die Zeit, die insgesamt zum fertigen Konfektionieren eines Rohrs nach seiner Herstellung und vor dem Versand vom Hersteller zu einem Kunden, benötigt wird, zu reduzieren. Auf diese Weise wird eine 1 00%-Prüfung aller hergestellten und konfektionierten Rohre möglich. An dem Sondenhalter ist in der Vorschubrichtung vor der Wirbelstromsonde ein Abstreifer vorgesehen. Dieser dient der Reinigung der Innenwandfläche des Rohrs. Da auf dem Sondenhalter sowohl die Wirbelstromsonde als auch der Abstreifer montiert sind, kann in einem einzigen Arbeitsschritt, nämlich dem durch Bewegen des Sondenhalters durch das Rohr sowohl die Messung der Innenwandfläche auf Defekte als auch eine Reinigung der Innenwandfläche durchgeführt werden.

Bisher werden im Stand der Technik die Innenwandflächen von Rohren mit Hilfe von durch das jeweilige Rohr hindurchgeschossenen Filzstopfen gereinigt. Dieser Schritt kann mit der offenbarungsgemäßen Vorrichtung entfallen. Ein Ersetzen der Durchschussreinigung durch eine Reinigung mit der offenbarungsgemäßen Vorrichtung bietet zudem den Vorteil, dass Fehler, die sich aus der Reinigung selbst ergeben, vermieden werden. Beim Durchschießen von Filzstoffen kommt es immer wieder dazu, dass Stopfen in dem jeweiligen Rohr stecken bleiben. Steckengebliebene Filzstopfen führen entweder zur Auslieferung eines fehlerbehafteten Rohrs mit dem steckengebliebene Stopfen oder die konfektionierten Rohre müssen zu 100% einer optischen Inspektion auf mögliche steckengebliebene Filzstopfen unterzogen werden.

Es versteht sich, dass der elastisch verformbare Abstreifer in einer Ausführungsform den Sondenhalter in der Umfangsrichtung vollständig umschließt, sodass der Abstreifer beim Durchführen des Sondenhalters durch das Rohr mit der Rohrinnenwandfläche vollumfänglich in Kontakt ist und diese reinigt. In einer Ausführungsform der Offenbarung ist der Abstreifer daher ringförmig, insbesondere kreisringförmig, nach oval oder nach Art eines Polygons ausgestaltet. In einer Ausführungsform der Offenbarung umfasst der Abstreifer einen Kautschuk, beispielsweise einen Fluorkautschuk, so wie er insbesondere unter dem Handelsnamen Viton kommerziell erhältlich ist. In einer Ausführungsform der Offenbarung ist der Abstreifer ein O-Ring. Dabei ist in einer Ausführungsform der Offenbarung der O-Ring in einer ringförmigen Nut in dem Sondenhalter aufgenommen.

In einer Ausführungsform der Offenbarung umfasst der Linearantrieb eine Kraft- und/oder Drehmomentbegrenzung. Befinden sich auf der Innenwandfläche des zu prüfenden Rohrs eine Verunreinigung, welche den weiteren Translationsweg des Sondenhalters durch das Rohr derart einschränkt, dass die Translationsbewegung blockiert wird, so begrenzt die Kraft- und/oder Drehmomentbegrenzung die Kraft, welche der Linearantrieb auf den Sondenhalter ausübt. Beschädigungen am Sondenhalter, an der Wirbelstromsonde und am Abstreifer werden vermieden. In einer Ausführungsform der Offenbarung umfasst die Vorrichtung zusätzlich eine Steuerung, welche wirksam mit dem Linearantrieb verbunden ist und die derart eingerichtet ist, dass sie beim Auslösen der Kraft- oder Drehmomentbegrenzung ein Fehlersignal ausgibt.

In einer Ausführungsform der Offenbarung ist die Kraft- oder Drehmomentbegrenzung mittels einer Magnetkupplung realisiert, wobei die Magnetkupplung antriebsseitig mit einem drehenden Elektromotor des Linearantriebs und abtriebsseitig beispielsweise mit einer Spindel des Linearantriebs verbunden ist.

In einer Ausführungsform der Offenbarung weist der Linearantrieb zudem einen Positionsgeber zum Bestimmen der axialen Position des Linearantriebs und damit der Wirbelstromsonde auf. In einer Ausführungsform der Offenbarung ist der Positionsgeber ein Drehgeber, der eine Drehposition einer Spindel des Linearantriebs oder eines drehenden Elektromotors des Linearantriebs erfasst. In einer Ausführungsform der Offenbarung weist der Positionsgeber eine axiale Auflösung von 1/100 mm oder weniger auf.

In einer Ausführungsform der Offenbarung beträgt eine axiale Auflösung der Wirbelstromsonde 50 mm oder weniger. Dabei bedeutet die axiale Auflösung der Wirbelstromsonde im Sinne der vorliegenden Anmeldung, dass die Wirbelstromsonde eine axiale Position eines Defekts oder einer Verunreinigung mit einer Genauigkeit von 50 mm oder weniger bestimmt.

Der Abstreifer muss derart durch das Rohr geführt werden, dass er in Kontakt mit der Innenwandfläche des zu prüfenden und zu reinigenden Rohrs ist. Dafür weist der Abstreifer verglichen mit dem Innendurchmesser des zu prüfenden Rohrs ein Übermaß auf. Das heißt vor dem Einführen des Abstreifers in das zu prüfende Rohr weist der Abstreifer einen Außendurchmesser auf, der größer ist als der Innendurchmesser des zu prüfenden Rohrs. Da der Abstreifer elastisch verformbar ist, kann er dennoch in das Rohr eingeführt werden.

Damit ein automatisiertes Einführen des Sondenhalters mit der Wirbelstromsonde und dem Abstreifer in das jeweilige zu prüfende Rohr möglich ist, weist die Vorrichtung in einer Ausführungsform eine Einlaufhülse auf. Dabei ist die Einlaufhülse derart angeordnet, dass das Rohr konzentrisch zu der Einlaufhülse und mit einem ersten Ende des Rohrs in Kontakt mit der Einlaufhülse in der Vorrichtung aufnehmbar ist. Ferner sind ein Innendurchmesser einer Innenwandfläche der Einlaufhülse und ein Außendurchmesser des Abstreifers derart aneinander angepasst, dass der Abstreifer eine sich entlang eines gesamten Umfangs der Innenwandfläche der Einlaufhülse erstreckende Kontaktfläche mit der Einlaufhülse ausbildet.

Die Einlaufhülse ermöglicht es, den Abstreifer in seinem komprimierten Zustand zu halten, auch wenn die Wirbelstromsonde und der Abstreifer nicht in ein zu prüfendes Rohr eingeführt sind. Sinddie Einlaufhülse und das zu prüfende Rohr konzentrisch zueinander angeordnet, und ein erstes Ende des Rohrs, oder genauer eine Stirnfläche des ersten Endes des Rohrs, sind in Kontakt mit der Einlaufhülse, so ist ein einfaches Einführen der Wirbelstromsonde und des Abstreifers in das zu prüfende Rohr möglich. Insbesondere ist in einer Ausführungsform das erste Ende des zu prüfenden Rohrs in Kontakt mit einer Stirnfläche der Einlaufhülse.

In einer Ausführungsform der Offenbarung weist der Abstreifer dann, wenn er nicht in die Einlaufhülse eingeführt ist, ein Übermaß gegenüber der Einlaufhülse auf. Mit anderen Worten ausgedrückt hat der nicht komprimierte Abstreifer einen Außendurchmesser, der größer ist als ein Innendurchmesser der Einlaufhülse.

Es versteht sich, dass in einer Ausführungsform der Innendurchmesser der Einlaufhülse gleich oder in etwa gleich dem Innendurchmesser eines mit der Vorrichtung zu prüfenden Rohrs ist.

Daher betrifft die vorliegende Offenbarung in einer Ausführungsform auch eine Kombination aus der Vorrichtung zum Prüfen einer Innenwandfläche eines Rohrs, so wie sie in Ausführungsformen davon in der vorliegenden Anmeldung beschrieben wird und aus einem zu prüfenden Rohr, wobei das zu prüfende Rohr in der Vorrichtung aufgenommen ist. Insbesondere ist das zu prüfende Rohr bei einer solchen Kombination in der Vorrichtung aufgenommen, sodass das Rohr konzentrisch zu der Einlaufhülse ausgerichtet ist.

In einer Ausführungsform der Offenbarung ist die Einlaufhülse Element mit einem Hohlzylinder, beispielsweise ein Rohrabschnitt. In einer Ausführungsform der Offenbarung umfasst die Einlaufhülse einen Innenwandabschnitt aus Kunststoff.

Weist die Einlaufhälse einen Innenwandabschnitt aus Kunststoff auf, so hat dies den Vorteil, dass sich in diesem kein Wirbelstromsignal generieren lässt. Auf diese Weise kann anhand des Wirbelstrommesssignals der Wirbelstromsonde unterschieden werden, ob diese bereits in ein zu prüfendes Rohr eingeführt ist, oder sich noch in der Einlaufhülse befindet.

In einer Ausführungsform der Offenbarung weist die Vorrichtung eine Zentrierführung auf, wobei die Zentrierführung derart ausgestaltet und angeordnet ist, dass das Rohr bei einem Zuführen des Rohrs in die Vorrichtung derart in der Zentrierführung aufnehmbar ist, dass die Zentrierführung mit einer Außenwandfläche des Rohrs in Kontakt kommt und so die Innenwandfläche des Rohrs und die Innenwandfläche der Einlaufhülse zentriert.

Eine solche Zentrierführung wird beispielsweise von einer U-förmigen Anordnung mit zwei Schenkeln und einem die zwei Schenkel verbindenden Rücken gebildet. Das Rohr wird durch die Öffnung zwischen den beiden Schenkeln in die U-förmige Anordnung eingeführt, sodass die beiden Schenkel und der Rücken das Rohr konzentrisch zu der Einlaufhülse führen. In einer Ausführungsform weisen dabei die beiden Schenkel der U-förmigen Anordnung einen Abstand auf, der gleich oder in etwa gleich einem Außendurchmesser des zu prüfenden Rohrs ist.

In einer Ausführungsform der Offenbarung weist die Vorrichtung zudem einen Anschlag auf, wobei der Anschlag derart angeordnet ist, dass ein zweites Ende des Rohrs in Kontakt mit dem Anschlag in der Vorrichtung aufnehmbar ist. Die Einlaufhülse und der Anschlag sind in einer Ausführungsform relativ zueinander in und entgegen der Zustellrichtung bewegbar, sodass das zu prüfende Rohr zwischen der Einlaufhülse und der Auslaufhülse einklemmbar ist. Eine solche Anordnung ermöglicht es, das zu prüfende Rohr automatisiert in die Vorrichtung einzubringen und es dann zwischen der Einlaufhülse und dem Anschlag einzuklemmen, bevor die Wirbelstromsonde und der Abstreifer aus der Einlaufhülse in das zu prüfende Rohr eingeführt werden.

In einer Ausführungsform der Offenbarung weist die Vorrichtung eine motorisch angetriebene Zustelleinrichtung auf, wobei die Zustelleinrichtung derart eingerichtet ist, dass sie in dem Betrieb der Vorrichtung die Einlaufhülse und den Anschlag relativ zueinander in und entgegen der Zustellrichtung bewegt, und wobei die Zustelleinrichtung einen Sensor umfasst, wobei der Sensor derart ausgestaltet ist, dass der Sensor in dem Betrieb der Vorrichtung nach dem Einklemmen des Rohrs zwischen der Einlaufhülse und dem Anschlag ein Maß für einen Abstand zwischen der Einlaufhülse und dem Anschlag erfasst.

In einer Ausführungsform der Offenbarung umfasst die Zustelleinrichtung einen Linearantrieb für eine translatorische Bewegung zumindest der Einlaufhülse oder der Auslaufhülse relativ zueinander, in und entgegen der Zustellrichtung. Durch eine Zustellbewegung der Einlaufhülse und des Anschlags aufeinander zu wird ein zu prüfendes Rohr zwischen der Einlaufhülse und dem Anschlag automatisiert eingeklemmt.

Erfasst man nun im geklemmten Zustand des Rohrs den Abstand zwischen der Einlaufhülse und dem Anschlag, so ist dieser Abstand im Wesentlichen gleich der Länge des Rohrs. In einer Ausführungsform der Offenbarung ist der Abstand zwischen der Einlaufhülse und dem Anschlag gemessen zwischen einer Stirnfläche der Einlaufhülse und einer Anschlagfläche des Anschlags. Dabei wird das erste Ende des zu prüfenden Rohrs mit der Stirnfläche der Einlaufhülse und das zweite Ende des Rohrs mit der Anschlagfläche des Anschlags in Kontakt gebracht.

Der Abstand zwischen der Einlaufhülse und dem Anschlag ist ein Maß für die absolute Länge des zu prüfenden Rohrs. Zum Erfassen des Abstands zwischen der Einlaufhülse und dem Anschlag eignen sich grundsätzlich eine Reihe von Messeinrichtungen und Messverfahren. Beispielsweise kann der Abstand zwischen der Einlaufhülse und dem Anschlag mit Hilfe eines optischen Verfahrens, beispielsweise einer optischen Dopplermessung oder eines interferometrischen Verfahrens, gemessen werden. In einer Ausführungsform jedoch wird der Abstand zwischen der Einlaufhülse und dem Anschlag mit Hilfe eines Positionsgebers der Zustelleinrichtung erfasst. Hält man wahlweise die Position der Einlaufhülse oder des Anschlags unveränderlich fest und variiert die Position des jeweils anderen Elements, so lässt sich aus der Kenntnis der Position des einen Elements und einer Messung der Position des anderen Elements das Maß für den Abstand erfassen.

Beispielsweise umfasst in einer Ausführungsform der Offenbarung die Zustelleinrichtung einen drehenden Elektromotor und eine von dem Elektromotor angetriebenen Spindeltrieb, welcher wahlweise entweder eine translatorische Bewegung der Einlaufhülse oder des Anschlags bewirkt. Ein Drehgeber, welcher eine Winkelposition der Welle des Elektromotors oder des Spindeltriebs sowie ggf. die Anzahl von Umdrehungen erfasst gibt dann in Kenntnis des Systems eine Position des von der Zustelleinrichtung angetriebenen Elements an. In Kenntnis der Position des anderen Elements reicht dies aus, um den Abstand zwischen der Einlaufhülse und dem Anschlag und damit ein MAß für die absolute Länge des zu prüfenden Rohrs zu bestimmen.

In einer Ausführungsform der Offenbarung umfasst der Anschlag eine Auslaufhülse, wobei ein Innendurchmesser einer Innenwandfläche der Auslaufhülse und ein Außendurchmesser des Abstreifers derart aneinander angepasst sind, dass der Abstreifer eine ringförmige Kontaktfläche mit der Auslaufhülse ausbildet, und wobei die Einlaufhülse und die Auslaufhülse derart angeordnet und ausgestaltet sind, dass das Rohr konzentrisch zu der Einlaufhülse und zu der Auslaufhülse und zwischen der Einlaufhülse und der Auslaufhülse in der Vorrichtung aufnehmbar ist.

Es versteht sich, dass in einer Ausführungsform der Offenbarung das zu prüfende Rohr zwischen der Einlaufhülse und der Auslaufhülse einklemmbar ist. In einer Ausführungsform der Offenbarung werden die Einlaufhülse und die Auslaufhülse in Kontakt mit einem ersten bzw. zweiten Ende des Rohrs gebracht, sodass die Wirbelstromsonde zusammen mit dem Abstreifer aus der Einlaufhülse in das Rohr, durch das Rohr hindurch und aus dem Rohr in die Auslaufhülse bewegbar ist.

In einer Ausführungsform der Offenbarung ist der Innendurchmesser der Auslaufhülse gleich dem Innendurchmesser der zu messenden Rohre.

In einer Ausführungsform der Offenbarung ist eine Stirnfläche der Auslaufhülse in Kontakt mit einer Stirnfläche des zweiten Endes des zu prüfenden Rohrs.

Während die Vorrichtung gemäß der vorliegenden Offenbarung für alle Arten von Rohren aus einem elektrisch leitfähigen Material geeignet ist, ist sie besonders geeignet zur Verwendung zum Prüfen von Rohren mit einer Länge von 1000 mm oder weniger, insbesondere von Rohren mit einer Länge von 400 mm oder weniger und mit einer Länge von 80 mm oder weniger. Daher beträgt in einer Ausführungsform der Offenbarung der Abstand zwischen der Einlaufhülse und dem Anschlag 1000 mm oder weniger, in einer Ausführungsform 400 mm oder weniger und in einer weiteren Ausführungsform 80 mm oder weniger.

In einer Ausführungsform der Offenbarung ist es möglich, mehrere Rohre hintereinander zwischen der Einlaufhülse und dem Anschlag in der Vorrichtung aufzunehmen. Insbesondere ist es in einer Ausführungsform möglich, zwei Rohre hintereinander zwischen der Einlaufhülse und dem Anschlag aufzunehmen. In einer solchen Ausführungsform können mehrere Rohre in einem Prüfdurchlauf geprüft und gereinigt werden.

In einer Ausführungsform der Offenbarung ist der Sondenhalter im Wesentlichen vertikal ausgerichtet, sodass die Zustellrichtung ebenfalls vertikal ist. Es versteht sich, dass dann die Einlaufhülse und der Anschlag so ausgerichtet werden müssen, dass ihre Stirnfläche bzw. ihre Anschlagfläche horizontal ausgerichtet sind. In einer solchen Ausführungsform unterstützt die Schwerkraft, welche in die Zustellrichtung zeigt, dass Abstreifen und Ableiten von Verunreinigungen aus dem zu prüfenden Rohr.

In einer Ausführungsform der Offenbarung weist die Vorrichtung eine Verriegelung auf, wobei die Verriegelung derart eingerichtet ist, dass die Verriegelung das Rohr nach einem Zuführen zwischen die Einlaufhülse und den Anschlag und vor einem Einklemmen des Rohrs zwischen der Einlaufhülse und dem Anschlag fixiert. Eine solche Verriegelung ist insbesondere dann sinnvoll, wenn die Zuführrichtung im Wesentlichen vertikal ausgerichtet ist, sodass das Rohr nach einem Zuführen und vor einem Zufahren der Einlaufhülse und des Anschlags und ohne eine Verriegelung aus der Vorrichtung herausfallen könnte.

In einer Ausführungsform der Offenbarung wirkt eine solche Verriegelung zusammen mit einer Zentrierführung, so wie sie zuvor beschrieben wurde. In einer Ausführungsform der Offenbarung positioniert die Zentrierführung in Form einer U-förmigen Anordnung das Rohr in drei zur Zuführrichtung senkrechten Richtungen, sodass die Verriegelung das Rohr in der vierten Richtung fixiert. In einer Ausführungsform der Offenbarung ist die Verriegelung eine federvorgespannte Rastkugel.

In einer Ausführungsform der Offenbarung weist zumindest die Einlaufhülse oder die Auslaufhülse einen Referenzabschnitt aus einem elektrisch leitfähigen Material mit einer Referenzstruktur zum Kalibrieren der Wirbelstromsonde auf. Eine solche Ausführungsform ermöglicht es, die Wirbelstromsonde vor einer Prüfung eines Rohrs, insbesondere vor der Prüfung jedes Rohrs, zu kalibrieren. In einer Ausführungsform der Offenbarung ist der Referenzabschnitt ein hohlzylindrischer Materialabschnitt aus einem elektrisch leitfähigen Material, wie Metall. In einer Ausführungsform der Offenbarung weist der Referenzabschnitt eine Referenzstruktur in Form einer Gravur in einer Oberfläche des Referenzabschnitts auf.

In einer Ausführungsform der Offenbarung weist zumindest die Einlaufhülse oder die Auslaufhülse einen zylindrischen Markierungsabschnitt mit einem Innenwandabschnitt aus einem nicht elektrisch leitfähigen Material auf, wobei sich der Markierungsabschnitt, wenn das zu prüfende Rohr in der Vorrichtung aufgenommen ist, zwischen dem Referenzabschnitt und dem zu prüfenden Rohr erstreckt. In einer Ausführungsform setzt sich die Einlaufhülse oder die Auslaufhülse aus einem hohlzylindrischen Referenzabschnitt, so wie er zuvor beschrieben wurde und einem hohlzylindrischen Markierungsabschnitt, beispielsweise aus Kunststoff, zusammen. Erfährt nun die Wirbelstromsonde eine Translationsbewegung ausgehend von der Einlaufhülse, so erfolgt im Bereich des Referenzabschnitts eine Kalibrierung der Wirbelstromsonde und durch den Markierungsabschnitt mit der Wand aus elektrisch nicht leitfähigem Material wird angezeigt, dass als nächstes Signale von dem zu prüfenden Rohr folgen. Eine Steuer- bzw. Auswerteeinrichtung unterscheidet so eindeutig Signale, die von dem Referenzabschnitt herrühren und Signale, die von dem zu prüfenden Rohr herrühren.

In einer Ausführungsform der Offenbarung weist die Vorrichtung zudem eine Roboterzuführung zum automatisierten Zuführen des zu prüfenden Rohrs zwischen die Einlaufhülse und den Anschlag auf. In einer Ausführungsform weist die Roboterzuführung einen automatisierten Greifarm zum Greifen und Bewegen des zu prüfenden Rohrs auf.

In einer Ausführungsform der Offenbarung weist die Vorrichtung eine Steuerung auf. Eine Steuerung umfasst in einer Ausführungsform einen Prozessor, der beispielsweise mittels einer Software, so eingerichtet ist, dass er die Vorrichtung steuert und Signale von den verschiedenen Sensoren der Vorrichtung auswertet.

In einer Ausführungsform der Offenbarung ist die Steuerung derart wirksam mit der Wirbelstromsonde verbunden, dass die Steuerung in dem Betrieb der Vorrichtung ein Wirbelstromesssignal von der Wirbelstromsonde empfängt, wobei die Steuerung derart eingerichtet ist, wenn das Wirbelstrommesssignal einen vorgegebenen Schwellenwert übersteigt oder unterschreitet, ein Fehlersignal ausgibt.

In einer Ausführungsform der Offenbarung ist die Steuerung derart wirksam mit dem Sensor der Zustelleinrichtung verbunden, dass die Steuerung in dem Betrieb der Vorrichtung ein Abstandsmesssignal von dem Sensor empfängt, wobei das Abstandsmesssignal ein Ist-Maß für den Abstand zwischen der Einlaufhülse und dem Anschlag repräsentiert, wobei die Steuerung derart eingerichtet ist, dass sie das Ist-Maß für den Abstand zwischen der Einlaufhülse und dem Anschlag mit einem Soll-Maß für die absolute Länge des Rohrs vergleicht und dann, wenn das Ist-Maß das Soll-Maß übersteigt oder unterschreitet, ein Fehlersignal ausgibt. Auf diese Weise können Rohre, die eine Länge aufweisen, die außerhalb der Toleranz für das Soll-Maß der absoluten Länge der zu konfektionierenden Rohre liegt, aussortiert werden.

Die zuvor genannte Aufgabe wird zudem durch eine Anlage zum Konfektionieren eines Rohrs aus Metall gelöst, wobei die Anlage eine Ablängeinrichtung zum Abschneiden des Rohrs von einem Endlosrohr aufweist sowie die Vorrichtung zum Prüfen der Innenwandfläche des Rohrs, so wie sie in Ausführungsformen davon zuvor beschrieben wurde.

In einer solchen Anlage zum Konfektionieren eines Rohrs aus Metall werden Endlosrohre fertig bearbeitet und zum Versand an einen Kunden konfektioniert. Insbesondere werden in der Offenbarungsgemäßen Anlage Rohre verarbeitet und konfektioniert, die als Nahtlosrohre durch Umformen, insbesondere durch Kaltumformen hergestellt wurden. In einer Ausführungsform der Offenbarung ist das Endlosrohr ein durch Kaltpilgerwalzen oder durch Kaltziehen hergestelltes Rohr, insbesondere ein Rohr aus Edelstahl.

In der Ablängeinrichtung wird von dem Endlosrohr jeweils ein Rohr mit einer vorgegebenen Länge abgetrennt. Unter einer Ablängeinrichtung im Sinne der vorliegenden Offenbarung wird eine Einrichtung verstanden, mit der sich das Endlosrohr in kürzere Abschnitte von zu prüfenden Rohren im Sinne der vorliegenden Anmeldung zerteilen lässt. Eine Ablängeinrichtung ist beispielsweise eine Säge, vorzugsweise eine automatisierte Säge, oder eine Abstechbank, vorzugsweise eine automatisierte Abstechbank.

In einer Ausführungsform der Offenbarung umfasst die Anlage zum Konfektionieren eines Rohrs neben der Ablängeinrichtung und der Vorrichtung zum Prüfen der Innenwandfläche des Rohrs weitere Bearbeitungsstationen. Insbesondere umfasst die Anlage zum Konfektionieren in einer Ausführungsform weitere Stationen zum Reinigen des Rohrs. In einer Ausführungsform der Offenbarung umfasst die Anlage zum Konfektionieren des Rohrs eine oder mehrere der folgenden Bearbeitungsstationen:
- eine Einrichtung zum Ausbilden einer Fase an einer Kante zwischen einer Stirnfläche des Rohrs und der Innenwandfläche und/oder der Außenwandfläche des Rohrs,
- eine Reinigungseinrichtung,
- eine Nassreinigungseinrichtung,
- eine Reinigungseinrichtung zum Reinigen der Außenwandfläche des Rohrs,
- eine Trockeneinrichtung zum Trocknen der Innenwandfläche und
- eine Trocknungseinrichtung zum Trocknen der Außenwandfläche des Rohrs.

In einer Ausführungsform der Offenbarung weist die Anlage zudem eine Einrichtung zum Ausbilden einer Fase an zumindest einer Stirnfläche des Rohrs auf und eine Fasenprüfvorrichtung zum Prüfern der Fase. Eine Fase im Sinne der vorliegenden Anmeldung ist eine gebrochene Kante am Übergang zwischen einer Stirnfläche des Rohrs und der Innenwandfläche oder der Außenwandfläche des Rohrs. Eine solche Fase ist häufig notwendig, um das Rohr später weiterverarbeiten zu können. Insbesondere hilft eine solche Fase beim Verbinden des Rohrs mit anderen Rohrabschnitten. Die Fase wird typischerweise durch spanende Bearbeitung, insbesondere Drehen des Rohrs ausgebildet.

In einer Ausführungsform der Offenbarung weist die Anlage eine Anlagensteuerung auf.

In einer Ausführungsform der Offenbarung weist die Fasenprüfvorrichtung zumindest einen Abschnitt einer Kegelfläche und eine Anschlagfläche auf, wobei die Fasenprüfvorrichtung derart eingerichtet ist, dass der Abschnitt der Kegelfläche auf die Anschlagfläche und damit auf eine erste Stirnfläche an dem ersten Ende des in der Fasenprüfvorrichtung aufgenommenen Rohrs zustellbar ist. Gleichzeitig ist eine zweite Stirnfläche am dem zweiten Ende des Rohrs mit der Anschlagfläche in Kontakt ist. Ferner weist die Fasenprüfvorrichtung einen Sensor auf, wobei der Sensor derart eingerichtet ist, dass mit dem Sensor ein Maß für einen Abstand zwischen dem Abschnitt der Kegelfläche und der Anschlagfläche erfassbar ist. Die Anlagensteuerung ist derart wirksam mit dem Sensor der Zustelleinrichtung der Vorrichtung zum Prüfen der Innenwandfläche des Rohrs verbunden, dass die Anlagensteuerung in dem Betrieb der Vorrichtung ein Längenmesssignal von dem Sensor der Zustelleinrichtung empfängt. Das Längenmesssignal repräsentiert ein Maß für den Abstand zwischen der Einlaufhülse und dem Anschlag und damit in dem Betrieb der Anlage ein Maß für die absolute Länge des zwischen der Einlaufhülse und dem Anschlag aufgenommenen Rohrs. Zudem ist die Anlagensteuerung derart wirksam mit dem Sensor der Fasenprüfvorrichtung verbunden ist, dass die Anlagensteuerung in dem Betrieb der Vorrichtung ein Fasenmesssignal von dem Sensor empfängt, wobei das Fasenmesssignal den Abstand zwischen dem Abschnitt der Kegelfläche und der Anschlagfläche repräsentiert. Die Anlagensteuerung ist derart eingerichtet ist, dass die Anlagensteuerung in dem Betrieb der Anlage aus dem Längenmesssignal und dem Fasenmesssignal ein Ist-Maß für eine Qualität der Fase berechnet.

In einer Ausführungsform der Offenbarung ist die Anlagensteuerung zudem derart eingerichtet, dass die Anlagensteuerung in dem Betrieb der Vorrichtung das Ist-Maß für die Qualität der Fase mit einem Soll-Maß für die Qualität der Fase vergleicht, wobei die Anlagensteuerung, wenn das Ist-Maß einen vorgegebenen Schwellenwert für das Soll-Maß unterschreitet oder überschreitet, ein Fehlersignal ausgibt.

Die Idee für die Fasenprüfvorrichtung ist dabei, dass die Kegelfläche den Soll-Winkel aufweist, unter dem die Fase an dem zu prüfenden Rohr ausgestaltet sein soll. Kennt man das Absolut-Maß für die Länge des zu prüfenden Rohrs aus der Längenmessung mit der Vorrichtung zum Prüfen der Innenwandfläche des Rohrs, so gibt es einen Erwartungswert, bis zu einer welchen Position die Kegelfläche auf die Stirnfläche des Rohrs und damit auf die Fase zugestellt werden kann, wenn die Fase richtig ausgebildet ist. Hat die Fase den richtigen Winkel, ist aber zu kurz oder zu lang, so wird die Position des Kegels beim Zustellen auf die Stirnfläche von dem erwarteten Soll-Wert für die Position abweichen. Gleiches gilt, wenn die Fase unter dem falschen Winkel ausgebildet ist. Auch dann erreicht die Kegelfläche nicht ihre Soll-Position beim Zustellen auf die Stirnfläche des Rohrs.

Die zuvor genannte Aufgabe wird auch durch ein Verfahren gemäß dem hierauf gerichteten unabhängigen Anspruch gelöst. Dazu weist das Verfahren der eingangs genannten Art weiterhin den Schritt auf (C) Abstreifen von Spänen oder anderen Verunreinigungen von der Innenwandfläche des Rohrs mit einem in der Vorschubrichtung vor der Wirbelstromsonde angeordneten, das Rohr umlaufend kontaktierenden, elastisch verformbaren Abstreifer, wobei das Abstreifen zumindest abschnittsweise gleichzeitig mit dem Erfassen des Wirbelstroms erfolgt.

Soweit in der vorstehenden allgemeinen Beschreibung sowie in der folgenden detaillierten Beschreibung der Varianten und in den Ansprüchen auf die Vorrichtung oder das Verfahren Bezug genommen wird, so gelten die beschriebenen Merkmale sowohl für die Vorrichtung als auch für das Verfahren.

### KURZE BESCHREIBUNG DER FIGUREN

Weitere Vorteile, Merkmale und Anwendungsmöglichkeiten der vorliegenden Offenbarung werden anhand der folgenden Beschreibung einer Ausführungsform und der dazugehörigen Figuren deutlich. Die vorstehende allgemeine Beschreibung sowie die folgende detaillierte Beschreibung der Ausführungsformen werden besser verstanden, wenn sie in Verbindung mit den beigefügten Zeichnungen gelesen werden. Die dargestellten Ausführungsformen sind nicht auf die gezeigten exakten Anordnungen und Einrichtungen beschränkt. In den Figuren sind gleiche Elemente mit gleichen Bezugszeichen bezeichnet.
- Fig. 1: ist eine schematische Querschnittsansicht einer Vorrichtung zum Prüfen der Innenwandfläche eines Rohrs gemäß einer Variante der vorliegenden Offenbarung.
- Fig. 2: ist ein schematisches Blockdiagramm einer Anlage zum Konfektionieren eines Rohrs mit der Vorrichtung zum Prüfen der Innenwandfläche eines Rohrs aus Figur 1.
- Fig. 3: ist eine schematische Querschnittsansicht der Fasenprüfvorrichtung der Anlage aus Figur 2.

### DETAILLIERTE BESCHREIBUNG

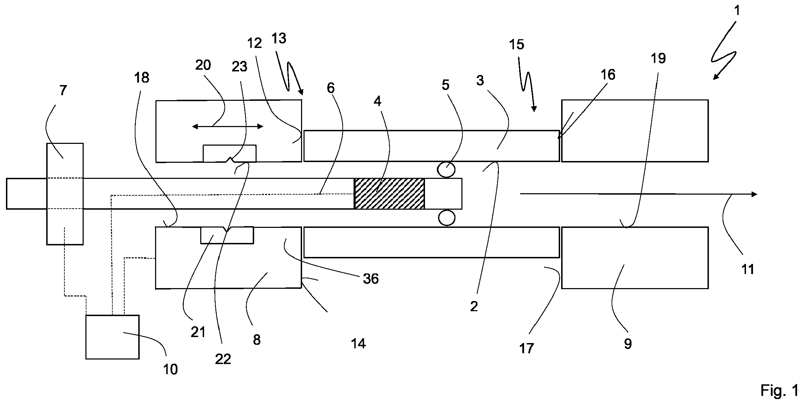

Figur 1 ist eine schematische Querschnittsansicht einer Variante der Vorrichtung 1 zum Prüfen einer Innenwandfläche 2 eines Rohrs 3. Die zu prüfenden Rohre sind Edelstahlrohr für Hochdruckanwendungen wie z.B. die Führung von flüssigem Wasserstoff.

Die Vorrichtung 1 umfasst eine Wirbelstromsonde 4, einen Abstreifer 5, einen Sondenhalter 6, einen Linearantrieb 7, eine Einlaufhülse 8, eine Auslaufhülse 9 sowie eine Steuerung 10.

Der Sondenhalter 6 ist in Form eines Rohrabschnitts länglich ausgedehnt und erstreckt sich durch die Einlaufhülse 8 hindurch in das zu prüfende Rohr 3 hinein. Der Sondenhalter 6 dient als Träger für die Wirbelstromsonde 4 und den Abstreifer 5. Der Sondenhalter 6 ist in einer Vorschubrichtung 11 und entgegen der Vorschubrichtung 11 mittels des in Figur 1 nur schematisch gezeigten Linearantriebs 7 automatisiert und motorisch angetrieben bewegbar.

Während der Prüfung des Rohrs 3 generiert eine Erregerspule in der Wirbelstromsonde 4 einen Wirbelstrom in dem elektrisch leitfähigen Edelstahlmaterial des Rohrs 3. Der induzierte Wirbelstrom wiederum strahlt ein magnetisches Wechselfeld ab, welches mit Hilfe einer Detektorspule in der Wirbelstromsonde 4 erfasst wird. Zeigt die Wand des Rohrs 3 einen Defekt, so ändert sich an der Position des Defekts die elektrische Leitfähigkeit des Materials des Rohrs 3. Der induzierte Wirbelstrom und damit das abgestrahlte Magnetfeld ändert sich gegenüber dem nicht defekten Material des Rohrs 3.

Während einer Wirbelstromprüfung sorgt die Steuerung 10, welche mit dem Linearantrieb 7 verbunden ist, für einen Vorschub des Sondenhalters 6 in der Vorschubrichtung 11 und die Steuerung 10 erhält gleichzeitig ein Messsignal von der Wirbelstromsonde 4. Unterschreitet das Wirbelstrommesssignal einen vorgegebenen Schwellenwert, so geht die Steuerung 10 vom Vorliegen eines Defekts in der Wand des Rohrs 3 aus und gibt ein Fehlersignal aus. Dieses Fehlersignal kann beispielsweise an eine übergeordnete Anlagensteuerung weitergeleitet werden, sodass das geprüfte Rohr 3 als defekt aus einer Anlage zum Konfektionieren des Rohrs ausgestoßen wird.

Gleichzeitig mit der Wirbelstromprüfung mittels der Wirbelstromsonde 4 wird die Innenwandfläche 2 des Rohrs 3 mittels des Abstreifers 5 gereinigt. Dabei werden Verunreinigungen, die sich auf der Innenwandfläche 2 des Rohrs 3 befinden abgestreift und aus dem Rohr 3 hinausbefördert.

In einer Variante ist die Vorrichtung 1 vertikal ausgerichtet, sodass die Vorschubrichtung 11 in Richtung der Gravitation zeigt. Dies erleichtert das Hinausbefördern von Verunreinigungen aus dem Rohr 3.

Der Abstreifer 5 ist als O-Ring aus einem Fluorkautschuk realisiert. Der O-Ring ist in einer ringförmigen Nut in dem Sondenhalter aufgenommen. Der Abstreifer 5 ist in der Vorschubrichtung 11 vor der Wirbelstromsonde 4 auf dem Sondenhalter 6 montiert. Um seine Reinigungswirkung zu erzielen weist der O-Ring ein Übermaß gegenüber dem Innendurchmesser des Rohrs 3 auf. Das heißt im nicht in das Rohr eingeführten, vollständig entspannten Zustand hat der O-Ring 5 einen Außendurchmesser, welcher geringfügig größer als der Innendurchmesser der zu prüfenden Rohre 3. Aufgrund seiner eigenen Elastizität drückt der O-Ring, wenn er sich innerhalb des Rohrs 3 befindet gegen die Innenwandfläche 2 des Rohrs 3. Der O-Ring bildet dann eine ringförmige Kontaktfläche mit der Innenwandfläche 2 des Rohrs 3 aus.

Andererseits macht dieses Übermaß des O-Rings 5 gegenüber dem Innendurchmesser des Rohrs 3 das Einführen des Sensorhalters 6 mit der Wirbelstromsonde und dem Abstreifer 5 in das Rohr jedoch schwierig. Daher weist die Vorrichtung 1 die Einlaufhülse 8 und die Auslaufhülse 9 auf.

Diese Hülsen 8, 9 haben den gleichen Innendurchmesser wie das Rohr 3. Sowohl die Einlaufhülse 8 als auch die Auslaufhülse 9 weisen in ihrem Inneren zylindrische Innenwandflächen 18, 19 auf. Da die Stirnfläche 12 eines ersten Endes 13 des Rohrs 3 während der Prüfung mit einer Stirnfläche 14 der Einlaufhülse 8 in Kontakt ist, kann der Abstreifer 5 ausgehend von der Einlaufhülse 8 ohne Unterbrechung von der Einlaufhülse 8 in das Rohr 3 bewegt werden. Gleiches gilt für den Auslauf aus dem zu prüfenden Rohr 3 an dem zweiten Ende 15 des Rohrs 3. Dort ist die Stirnfläche 16 des Rohrs 3 mit der Stirnfläche 17 der Auslaufhülse 9 in Kontakt.

Das Rohr 3 ist so in der Vorrichtung aufgenommen, dass die Innenwandfläche 2 konzentrisch zu den Innenwandflächen 18, 19 der Einlaufhülse 8 und der Auslaufhülse 9 ist. Da die Einlaufhülse 8 und die Auslaufhülse 9 den gleichen Innendurchmesser ihrer Innenwandflächen 18, 19 aufweisen, wie die Innenwandfläche 2 des Rohrs bilden die Einlaufhülse 8 und die Auslaufhülse 9 eine Verlängerung der Innenwandfläche 2 des Rohrs 3.

Um das Rohr 3 zwischen der Einlaufhülse 8 und der Auslaufhülse 9 für die Prüfung einklemmen zu können, ist die Einlaufhülse 8 gegenüber der Auslaufhülse 9 automatisiert in und entgegen der Zustellrichtung 11 bewegbar. Nach einem Zuführen des Rohrs 3 zwischen die Einlaufhülse 8 und die Auslaufhülse 9 wird die Einlaufhülse 8 motorisch angetrieben auf die Auslaufhülse 9 hin zugestellt, bis sie das Rohr zwischen den Stirnflächen 14, 17 der Einlaufhülse 8 und der Auslaufhülse 9 einklemmt.

Da die Position der Auslaufhülse 9 in der Vorrichtung 1 festgelegt und konstant ist, liegt auch die Position ihrer Stirnfläche 17 fest. In Kenntnis der Position der Stirnfläche 17 lässt sich nach einer Bestimmung der Position der Einlaufhülse 8 bzw. deren Stirnfläche 14 entlang ihres Zustellwegs 20 die absolute Länge des gerade zu prüfenden Rohrs 3 bestimmen.

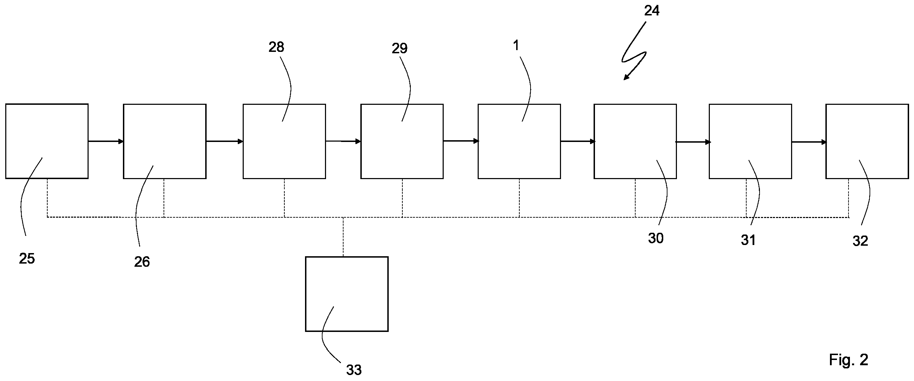

Dabei ist die Steuerung 10 so eingerichtet, dass sie dann, wenn die Einlaufhülse 8 die Stirnfläche 12 des zu prüfenden Rohrs 3 erreicht hat, aus der Position der Einlaufhülse 8 eine absolute Länge des Rohrs 3 bestimmt. Die Steuerung 10 gibt ein Fehlersignal aus, wenn die absolute Länge des Rohrs 3 außerhalb der Toleranz für den Soll-Wert der absoluten Länge der zu prüfenden Rohre 3 liegt. Integriert in eine Anlage zum Konfektionieren von Rohren, so wie sie schematisch in Figur 2 skizziert ist, führt dieses Fehlersignal dazu, dass das geprüfte Rohr 3, vorzugsweise vor der eigentlichen Prüfung mit der Wirbelstromsonde 4, als fehlerhaft ausstoßen wird.

In der gezeigten Variante sind die Einlaufhülse 8 weitgehend und die Auslaufhülse 9 vollständig aus Kunststoff hergestellt. Daher zeigt die Wirbelstromsonde 4 im Bereich der Einlaufhülse 8 und der Auslaufhülse 9 kein charakteristisches Signal und Anfang und Ende des Prüflings in Form des Rohrs 3 sind eindeutig aus dem Wirbelstrommesssignal der Wirbelstromsonde 4 zu bestimmen.

Die Einlaufhülse 8 jedoch weist einen ringförmigen Einsatz als Referenzabschnitt 21 auf. Dieser Referenzabschnitt 21 ist aus Metall hergestellt. Seine Innenwandfläche 22 zeigt eine Gravur 23 als Referenzstruktur. Diese Gravur 23 führt nicht nur zur einer Änderung der Oberflächenstruktur des Rings 21, sondern auch zu einer Gefügeveränderung, so dass im Bereich der Gravur das Wirbelstrommesssignal kontrolliert verändert ist. Daher die die Gravur 23 zum Kalibrieren der Wirbelstromsonde 4. Da der Referenzabschnitt 21 in die Einlaufhülse 8 integriert ist, kann eine Kalibrierung der Wirbelstromsonde 4 vor der Prüfung eines jeden Rohrs 3 erfolgen.

Die Einlaufhülse 8 hat zwischen dem Referenzabschnitt 21 und dem zu prüfenden Rohr 3 einen Markierungsabschnitt 36 aus Kunststoff. Erfährt nun die Wirbelstromsonde 4 eine Translationsbewegung ausgehend von der Einlaufhülse 8, so erfolgt im Bereich des Referenzabschnitts 21 eine Kalibrierung der Wirbelstromsonde 4 und durch den Markierungsabschnitt 36 mit der Wand aus elektrisch nicht leitfähigem Material wird angezeigt, dass als nächstes Signale von dem zu prüfenden Rohr 3 folgen.

In Figur 2 in einem Blockdiagramm die Integration der Vorrichtung 1 zum Prüfen der Innenwandfläche 2 des Rohrs 3 aus Figur 1 in eine Anlage 24 zum Konfektionieren von Rohren 3 dargestellt.

Die Anlage 24 umfasst neben der Vorrichtung 1 zum Prüfen der Innenwandfläche des Rohrs die folgenden weiteren Bearbeitungsstationen in der aufgeführten Reihenfolge: Eine Abstechbank 25 dient dem abstechen einzelner Rohre 3 von einem bereitgestellten nahtlosen Endlosrohr. Eine Stirnflächendrehbank 26 dient dem Ausbilden einer Fase 27 an einer Kante zwischen der Stirnfläche 12 und der Innenwandfläche 2 des jeweiligen Rohrs 3. Zudem weist die Anlage 24 eine Nassreinigungseinrichtung 28, eine Außenreinigungseinrichtung 29 zum Reinigen der Außenwandfläche des jeweiligen Rohrs 3 vor der Vorrichtung 1 zum Prüfen des jeweiligen Rohrs 3 und eine Fasenprüfvorrichtung 30, eine Innentrockeneinrichtung 31 zum Trocknen der Innenwandfläche 2 sowie eine Außentrocknungseinrichtung 32 zum Trocknen der Außenwandfläche des jeweiligen Rohrs nach der Vorrichtung 1 zum Prüfen auf. Die einzelnen Stationen der Anlage 24 werden von einer Anlagensteuerung 33 gesteuert.

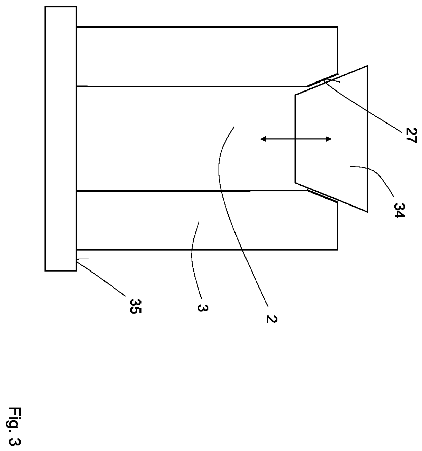

Figur 3 zeigt schematisch die Fasenprüfvorrichtung 30 der Anlage 24 aus Figur 2. Die Fasenprüfvorrichtung 30 zumindest umfasst einen Kegelstumpf 34 mit einer Kegelstumpffläche und eine Anschlagfläche 35. Der Kegelstumpf 34 ist auf die Anschlagfläche 35 und damit auf eine erste Stirnfläche 12 eines in der Fasenprüfvorrichtung 30 aufgenommenen Rohrs 3 zustellbar. Gleichzeitig ist eine zweite Stirnfläche 16 des Rohrs 3 mit der Anschlagfläche 35 in Kontakt. Die Fasenprüfvorrichtung 30 weist zudem einen Sensor auf, der Abstand zwischen dem Kegelstumpf 34 und der Anschlagfläche 35 erfasst wird. Die Anlagensteuerung 33 empfängt das Längenmesssignal von dem Sensor der Zustelleinrichtung der Vorrichtung 1 zum Prüfen der Innenwandfläche des Rohrs sowie ein Fasenmesssignal von dem Sensor der Fasenprüfvorrichtung 30. Aus dem Längenmesssignal und dem Fasenmesssignal bestimmt die Anlagensteuerung 33 ein Ist-Maß für eine Qualität der Fase 27.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Vorrichtung
- 2: Innenwandfläche des Rohrs
- 3: Rohr
- 4: Wirbelstromsonde
- 5: Abstreifer
- 6: Sondenhalter
- 7: Linearantrieb
- 8: Einlaufhülse
- 9: Auslaufhülse
- 10: Steuerung
- 11: Vorschubrichtung
- 12: Stirnfläche des Rohrs
- 13: erstes Ende des Rohrs
- 14: Stirnfläche der Einlaufhülse
- 15: zweites Ende des Rohrs
- 16: Stirnfläche des Rohrs
- 17: Stirnfläche der Auslaufhülse
- 18: Innenwandfläche der Einlaufhülse
- 19: Innenwandfläche der Auslaufhülse
- 20: Zustellweg
- 21: Referenzabschnitt
- 22: Innenwandfläche
- 23: Gravur
- 24: Anlage zum Konfektionieren
- 25: Abstechbank
- 26: Stirnflächendrehbank
- 27: Fase
- 28: Nassreinigungseinrichtung
- 29: Außenreinigungseinrichtung
- 30: Fasenprüfvorrichtung
- 31: Innentrockeneinrichtung
- 32: Außentrockeneinrichtung
- 33: Anlagensteuerung
- 34: Kegelstumpf
- 35: Anschlagfläche
- 36: Markierungsabschnitt

## Patentansprüche

1. Vorrichtung (1) zum Prüfen einer Innenwandfläche (2) eines Rohrs (3) aus Metall mit
einem Linearantrieb (7),
einem länglich ausgedehnten Sondenhalter (6) und
einer Wirbelstromsonde (4),
wobei die Wirbelstromsonde (4) an dem Sondenhalter (6) montiert ist und
wobei der Sondenhalter (6) derart wirksam mit dem Linearantrieb (7) verbunden ist, dass der Sondenhalter (6) mit der Wirbelstromsonde (4) in einem Betrieb der Vorrichtung (1) in einer axialen Vorschubrichtung (11) durch das zu prüfenden Rohr (3) bewegbar ist,
**dadurch gekennzeichnet, dass**
an dem Sondenhalter (6) in der Vorschubrichtung (11) vor der Wirbelstromsonde (4) ein den Sondenhalter (6) in einer Umfangsrichtung ()umschließender, elastisch verformbarer Abstreifer (5) zum Abstreifen von Spänen oder anderen Verunreinigungen von der Innenwandfläche (2) des Rohrs (3) angeordnet ist.

2. Vorrichtung (1) nach dem vorhergehenden Anspruch, wobei der Abstreifer (5) ein O-Ring ist.

3. Vorrichtung (1) nach einem der vorhergehenden Ansprüche,
wobei die Vorrichtung (1) zumindest eine Einlaufhülse (8) aufweist,
wobei die Einlaufhülse (8) derart angeordnet ist, dass das Rohr (3) konzentrisch zu der Einlaufhülse (8) und mit einem ersten Ende (13) des Rohrs (3) in Kontakt an die Einlaufhülse (8) in der Vorrichtung (1) aufnehmbar ist, und
wobei ein Innendurchmesser einer Innenwandfläche (18) der Einlaufhülse (8) und ein Außendurchmesser des Abstreifers (5) derart aneinander angepasst sind, dass der Abstreifer (5) eine sich entlang eines gesamten Umfangs der Innenwandfläche (18) der Einlaufhülse (8) erstreckende Kontaktfläche mit der Einlaufhülse (8) ausbildet.

4. Vorrichtung (1) nach dem vorhergehenden Anspruch,
wobei die Vorrichtung (1) eine Zentrierführung aufweist und
wobei die Zentrierführung derart ausgestaltet und angeordnet ist, dass das Rohr (3) bei einem Zuführen des Rohrs (3) in die Vorrichtung (1) derart in der Zentrierführung aufnehmbar ist, dass die Zentrierführung mit einer Außenwandfläche des Rohrs (3) in Kontakt kommt und so die Innenwandfläche (2) des Rohrs (3) und die Innenwandfläche (18) der Einlaufhülse zentriert.

5. Vorrichtung (1) nach dem vorhergehenden Anspruch,
wobei die Vorrichtung (1) einen Anschlag (9) aufweist,
wobei der Anschlag (9) derart angeordnet ist, dass ein zweites Ende (15) des Rohrs (3) in Kontakt mit dem Anschlag (9) in der Vorrichtung (1) aufnehmbar ist, und
wobei die Einlaufhülse (8) und der Anschlag (9) relativ zueinander in und entgegen der Vorschubrichtung (11) bewegbar sind, so dass das Rohr zwischen der Einlaufhülse (8) und dem Anschlag (9) einklemmbar ist.

6. Vorrichtung (1) nach dem vorhergehenden Anspruch,
wobei die Vorrichtung (1) eine motorisch angetrieben Zustelleinrichtung aufweist,
wobei die Zustelleinrichtung derart eingerichtet ist, dass sie in dem Betrieb der Vorrichtung die Einlaufhülse (8) und den Anschlag relativ zueinander in und entgegen der Zustellrichtung bewegt, und
wobei die Zustelleinrichtung einen Sensor (4) umfasst, wobei der Sensor (4) derart ausgestaltet ist, dass der Sensor (4) in dem Betrieb der Vorrichtung (1) nach dem Einklemmen des Rohrs (3) zwischen der Einlaufhülse (8) und dem Anschlag (9) ein Maß für einen Abstand zwischen der Einlaufhülse (8) und dem Anschlag (9) erfasst.

7. Vorrichtung (1) nach Anspruch 5 oder 6,
wobei der Anschlag eine Auslaufhülse (9) umfasst,
wobei ein Innendurchmesser einer Innenwandfläche (19) der Auslaufhülse (9) und ein Außendurchmesser des Abstreifers (5) derart aneinander angepasst sind, dass der Abstreifer (5) eine ringförmige Kontaktfläche mit der Einlaufhülse (8) ausbildet, und
wobei die Einlaufhülse (8) und die Auslaufhülse (9) derart angeordnet und ausgestaltet sind, dass das Rohr (3) konzentrisch zu der Einlaufhülse (8) und zu der Auslaufhülse (9) und zwischen der Einlaufhülse (8) und der Auslaufhülse (9) in der Vorrichtung (1) aufnehmbar ist.

8. Vorrichtung (1) nach einem der vorhergehenden Ansprüche soweit auf Anspruch 5 rückbezogen, wobei die Vorrichtung (1) eine Verriegelung () aufweist, wobei die Verriegelung () derart eingerichtet ist, dass die Verriegelung das Rohr (3) nach einem Zuführen zwischen die Einlaufhülse (8) und den Anschlag und vor einem Einklemmen des Rohrs (3) zwischen der Einlaufhülse (8) und dem Anschlag fixiert.

9. Vorrichtung nach einem der vorhergehenden Ansprüche soweit auf Anspruch 3 oder Anspruch 7 zurückbezogen, wobei zumindest die Einlaufhülse (8) oder die Auslaufhülse (9) einen Referenzabschnitt (21) aus einem elektrisch leitfähigen Material mit einer Referenzstruktur (23) zum Kalibrieren der Wirbelstromsonde (4) aufweist.

10. Vorrichtung (1) nach dem vorhergehenden Anspruch, wobei zumindest die Einlaufhülse (8) oder die Auslaufhülse (9) einen zylindrischen Markierungsabschnitt (36) mit einem Innenwandabschnitt aus einem nicht leitfähigen Material aufweist, wobei sich der Markierungsabschnitt (36), wenn das zu prüfende Rohr (3) in der Vorrichtung (1) aufgenommen ist, zwischen dem Referenzabschnitt (21) und dem zu prüfenden Rohr (3) erstreckt.

11. Vorrichtung (1) nach einem der vorhergehenden Ansprüche, wobei die Vorrichtung (1) eine Steuerung (10) aufweist, wobei die Steuerung (10) derart wirksam mit der Wirbelstromsonde (4) verbunden ist, dass die Steuerung (10) in dem Betreib des Vorrichtung (1) ein Wirbelstrommesssignal von der Wirbelstromsonde (4) empfängt, und wobei die Steuerung (10) derart eingerichtet ist, dass sie, wenn das Wirbelstrommesssignal einen vorgegebenen Schwellenwert übersteigt oder unterschreitet, ein Fehlersignal ausgibt.

12. Anlage zum Konfektionieren eines Rohrs (3) aus Metall mit
einer Ablängeinrichtung (25) zum Abschneiden des Rohrs (3) von einem Endlosrohr und
der Vorrichtung (1) zum Prüfen der Innenwandfläche (2) des Rohrs (3) nach einem der vorhergehenden Ansprüche.

13. Anlage (24) nach dem vorhergehenden Anspruch soweit von Anspruch 6 abhängig, mit
einer Einrichtung (26) zum Ausbilden einer Fase an zumindest einer Stirnfläche (12) des Rohrs (3),
einer Fasenprüfvorrichtung (30) zum Prüfen der Fase und
einer Anlagensteuerung (33),
wobei die Fasenprüfvorrichtung (30) zumindest einen Abschnitt einer Kegelfläche und eine Anschlagfläche (35) aufweist,
wobei die Fasenprüfvorrichtung (30) derart eingerichtet ist, dass der Abschnitt der Kegelfläche auf eine erste Stirnfläche (12) des in der Fasenprüfvorrichtung (30) aufgenommenen Rohrs (3) zustellbar ist, während eine zweite Stirnfläche (16) des Rohrs (3) mit der Anschlagfläche (???) in Kontakt ist,
wobei die Fasenprüfvorrichtung (30) einen Sensor aufweist, wobei der Sensor derart eingerichtet ist, dass mit dem Sensor ein Maß für einen Abstand zwischen dem Abschnitt der Kegelfläche und der Anschlagfläche (35) erfassbar ist, wobei die Anlagensteuerung (10) derart wirksam mit dem Sensor (4) der Zustelleinrichtung verbunden ist, dass die Anlagenteuerung in dem Betreib des Vorrichtung (1) ein Längenmesssignal von dem Sensor (4) der Zustelleinrichtung empfängt, wobei das Längenmesssignal ein Maß für den Abstand zwischen der Einlaufhülse (8) und dem Anschlag (9) und damit in dem Betrieb der Anlage ein Maß für die absolute Länge des zwischen der Einlaufhülse (8) und dem Anschlag (9) aufgenommenen Rohrs (3) repräsentiert,
wobei die Anlagensteuerung (33) derart wirksam mit dem Sensor (4) der Fasenprüfvorrichtung (30) verbunden ist, dass die Anlagenteuerung (33) in dem Betrieb der Vorrichtung ein Fasenmesssignal von dem Sensor (4) empfängt, wobei das Fasenmesssignal den Abstand zwischen dem Abschnitt der Kegelfläche und der Anschlagfläche (35) repräsentiert, und
wobei die Anlagensteuerung (10) derart eingerichtet ist, dass die Anlagensteuerung (10) in dem Betrieb der Vorrichtung (1) aus dem Längenmesssignal und dem Fasenmesssignal ein Ist-Maß für eine Qualität der Fase berechnet.

14. Verfahren zum Prüfen einer Innenwandfläche (2) eines Rohrs (3) aus Metall mit den Schritten
(A) Bewegen einer Wirbelstromsonde (4) in einer Vorschubrichtung (11) durch das Rohr (3) und
(B) Erfassen eines in der Wand des Rohrs (3) von der Innenwandfläche (2) her induzierten Wirbelstroms mit der Wirbelstromsonde (4),
**dadurch gekennzeichnet, dass** das Verfahren weiterhin den Schritt aufweist
(C) Abstreifen von Spänen oder anderen Verunreinigungen von der Innenwandfläche (2) des Rohrs (3) mit einem in der Vorschubrichtung (11) vor der Wirbelstromsonde (4) angeordneten, das Rohr (3) ringförmig kontaktierenden, elastisch verformbaren Abstreifer (5),
wobei das Abstreifen zumindest abschnittsweise gleichzeitig mit dem Erfassen des Wirbelstroms erfolgt.
